# EUROPÄISCHE PATENTSCHRIFT

(11) **EP 3 381 774 B1**
(45) Veröffentlichungstag und Bekanntmachung des Hinweises auf die Patenterteilung: **06.10.2021**
(21) Anmeldenummer: 18162946.0
(22) Anmeldetag: 20.03.2018
(51) Int. Cl.: B62D 61/12, B60L 7/18, B60L 15/20, B60L 7/20, B60L 7/28, B60L 7/26, B60T 10/00, B60G 17/016, B60T 1/10, B60T 13/58, F16D 61/00, F16D 57/00, B60T 10/02, B60L 50/16, B62D 59/04

(54) **KRAFTFAHRZEUG UMFASSEND EINE DAUERBREMSVORRICHTUNG**
MOTOR VEHICLE WITH A RETARDER
VÉHICULE AUTOMOBILE AVEC UN DISPOSITIF DE FREINAGE PERMANENT

(30) Priorität: 31.03.2017 DE 102017003082
(43) Veröffentlichungstag der Anmeldung: 03.10.2018
(73) Patentinhaber: MAN Truck & Bus SE, 80995 München (DE)
(72) Erfinder: Schneider, Bernhard, 85250 Wollomoos (DE)
(74) Vertreter: v. Bezold & Partner Patentanwälte - PartG mbB

(56) Entgegenhaltungen:
- EP-A1- 2 151 344
- EP-A1- 3 075 594
- EP-A2- 2 730 488
- WO-A1-2016/135013
- WO-A2-2012/042278
- DE-A1-102008 048 520
- DE-A1-102009 001 149
- DE-A1-102010 047 233
- DE-A1-102011 009 228
- US-A1- 2011 094 807
- US-A1- 2016 318 501
- US-B2- 7 222 867

## Beschreibung

Die Erfindung betrifft ein Fahrzeug, durch ein Zugfahrzeug und ein Anhängerfahrzeug gebildeten Fahrzeugverband, wobei das Anhängerfahrzeug ein Sattelauflieger und/oder ein Anhänger ist, umfassend eine Dauerbremsvorrichtung.

Aus dem Stand der Technik sind Dauerbremsvorrichtungen für Kraftfahrzeuge bekannt. Eine Dauerbremse ist eine Einrichtung, die länger andauerndes und auch verschleißfreies Bremsen ermöglicht, ohne in ihrer Bremsleistung nachzulassen. Dauerbremsvorrichtungen werden in Kraftfahrzeugen als zusätzliche verschleißfreie Dauerbremseinrichtungen zur Entlastung der als Reibungsbremsen ausgebildeten Rad- bzw. Betriebsbremsen eingesetzt. Insbesondere bei Fahrzeugen mit hohem Gesamtgewicht, bei Bremsvorgängen mit hoher Geschwindigkeit, beim Befahren von steilem Gefälle, bei schwierigen Fahrbahnverhältnissen auf abfallender Strecke mit häufigen Bremsvorgängen, und bei längeren Bergabfahrten verhindern Dauerbremsvorrichtungen den vorzeitigen Verschleiß sowie eine thermische Überlastung der Reibungsbremsen und erhöhen die aktive Sicherheit sowie die Wirtschaftlichkeit von Nutzfahrzeugen. Aus dem Stand der Technik sind primäre und sekundäre Dauerbremsen bekannt. Eine primäre Dauerbremse ist üblicherweise motorseitig im Kraftfluss vor dem Getriebe angeordnet. Primäre Dauerbremsen wirken üblicherweise über die Kurbelwelle des Motors und sind daher drehzahlabhängig. Beispiele für primäre Dauerbremsen sind Motorbremsen, z. B. als Auspuffklappenbremsen, als ventilgesteuerte Dauerbremsen und/oder als Turbosysteme oder sogenannte Primärretarder. Sekundäre Dauerbremsen sind im Kraftfluss hinter dem Getriebe angeordnet, beispielsweise an der Kardanwelle, und umfassen beispielsweise hydraulisch wirkende Retarder oder Wirbelstrombremsen. Sekundäre Dauerbremsen sind oftmals geschwindigkeitsabhängig. Zu den sekundären Dauerbremsen zählen die Sekundärretarder, insbesondere in Form einer hydrodynamischen Strömungsbremse oder einer elektromagnetischen Wirbelstrombremse.

Bei den aus der Praxis bekannten Nutzfahrzeugen sind die Bedienelemente zum Ansteuern der Dauerbremsvorrichtung, insbesondere des Retarders, üblicherweise als separate im Cockpitbereich angeordnete Schalter ausgebildet. Die Dosierung des Retarder-Bremsmomentes erfolgt demnach vom Fahrer von Hand, beispielsweise über einen Lenkstockschalter. Die Offenlegungsschrift DE 10 2008 034 974 A1 beschreibt beispielsweise ein Verfahren zur Bremsmomenteinstellung eines hydrodynamischen Retarders, bei dem eine manuelle Vorgabe der Höhe der Leistungsübertragung des Retarders mittels eines Wählhebels von Hand möglich ist. Aus der Praxis sind rastende Lenkstockschalter zur Steuerung der Retarderbremsleistung bekannt. Hierbei werden alle Bremsstufen stufenweise "rastend" eingestellt, wie beispielsweise in der DE 44 460 85 B4 beschrieben.

DE 10 2008 048 520 A1 beschreibt ein Railsystem zum Antrieb für Nebenverbraucher für Transportfahrzeuge, wobei ein Elektromotor als Generator betrieben werden und zur Bereitstellung eines Dauerbremsmoments dienen kann.

US 2016 0318 501 A1 offenbart ein adaptives Steuersystem und Fahrerkontrollsystem, das ein regeneratives Dauerbremsmoment in Abhängigkeit der Fahrzeugmasse, der Straßenneigung oder einer veränderten Beschleunigungsrate bereitstellen kann.

EP 2 730 488 A1 kann ein Einhänger für ein Nutzfahrzeug entnommen werden, umfassend zumindest ein Rad und eine Koppelungseinrichtung, über die der Einhänger mit dem Fahrzeug verbindbar ist. Der Einhänger kann zudem mit einer rekuperativen Bremseinrichtung ausgestattet sein und somit zur Unterstützung der Dauerbremse dienen.

US 2011 009 48 01 A1 beschreibt ein elektrisches Fahrsystem, aufweisend zwei Elektromotoren, das zur nachträglichen Ausrüstung passiver Fahrzeuge dienen kann. Die Elektromotoren können auch im Generatorbetrieb zum regenerativen Bremsen eingesetzt werden.

Bekannte Dauerbremsvorrichtungen weisen nachteilige Eigenschaften in Bezug auf den beim Dauerbremsvorgang erzeugten Wärmeeintrag in das Motorkühlsystem und in Bezug auf die Geräuschentwicklung auf. Der Wärmeeintrag erzeugt ferner eine nachteilige Energieeffizienz, da kinetische Energie ungenutzt in Wärme umgewandelt wird.

Kraftfahrzeuge sind vermehrt mit elektrischen Antriebssystemen ausgerüstet, die bekanntermaßen auch zum rekuperativen Bremsen im Hinblick auf mögliche Energie- und CO2-Reduzierungen genutzt werden. Auch im Bereich schwerer Nutzfahrzeuge gibt es bereits Ansätze zur Nutzung des rekuperativen Bremsens.

Es ist eine Aufgabe der Erfindung, eine Dauerbremsvorrichtung für ein Kraftfahrzeug, insbesondere für ein Nutzfahrzeug, bereitzustellen, mit der Nachteile herkömmlicher Dauerbremsvorrichtungen vermieden werden können. Die Aufgabe der Erfindung ist es insbesondere, eine Dauerbremsvorrichtung bereitzustellen, mit dem eine Energieeffizienz beim Bremsen verbessert werden kann und die einfach bedienbar ist.

Diese Aufgaben werden durch ein Kraftfahrzeug mit einer Dauerbremsvorrichtung mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird eine Dauerbremsvorrichtung für ein Kraftfahrzeug bereitgestellt. Das Kraftfahrzeug kann ein Nutzfahrzeug sein. Das Kraftfahrzeug ist erfindungsgemäß ein durch ein Zugfahrzeug und ein Anhängerfahrzeug gebildeter Fahrzeugverband, z. B. ein Sattelzug oder Gliederzug, wobei das Anhängerfahrzeug ein Sattelauflieger und/oder ein Anhänger ist.

Die Dauerbremsvorrichtung umfasst eine Dauerbremse, die ein länger andauerndes und auch verschleißfreies Bremsen ermöglicht, ohne in ihrer Bremsleistung nachzulassen. Die Dauerbremsvorrichtung umfasst ferner eine Eingabeeinrichtung, mittels derer eine Fahrzeug-Verzögerungsanforderung von einer Bedienperson einstellbar und/oder auswahlbär ist, insbesondere in Stufen einstellbar und/oder auswahlbär ist. Die Dauerbremsvorrichtung umfasst ferner eine Dauerbremsen-Steuereinrichtung zur Ansteuerung der Dauerbremse, die ausgebildet ist, in Abhängigkeit von der eingestellten Fahrzeug-Verzögerungsanforderung eine Dauerbremsen-Bremsanforderung, die ein von der Dauerbremse aufzubringendes Dauerbremsen-Bremsmoment kodiert, zu bestimmen. Die Dauerbremsen-Steuereinrichtung wird nachfolgend auch kurz als Steuereinrichtung bezeichnet.

Die Eingabeeinrichtung kann als Handbetätigungselement, z. B. als Schalter oder Bedienhebel, insbesondere als Lenkstockhebel ausgeführt sein. Die Eingabeeinrichtung kann aber auch als Eingabedisplay und/oder Sprachbedienung ausgeführt sein. Über die Eingabeeinrichtung kann eine Bedienperson, z. B. der Fahrer, bei Bedarf, z. B. auf einer längeren Gefällestrecke, z. B. beim Schubbetrieb, die Dauerbremse ein- und ausschalten und vorzugweise verschiedene Bremsstufen der Dauerbremse anfordern. Unter der Fahrzeug-Verzögerungsanforderung wird allgemein das Ausgangssignal der Eingabeeinrichtung verstanden, welches bei Bedienung der Eingabeeinrichtung erzeugt und an die Steuereinrichtung übermittelt wird und das von der Steuereinrichtung in eine Dauerbremsen-Bremsanforderung "übersetzt" wird.

Erfindungsgemäß weist die Dauerbremse mindestens eine zum rekuperativen Bremsen ausgeführte elektrische Maschine auf, deren Bremsleistung über die Eingabeeinrichtung und die Steuereinrichtung einstellbar, insbesondere in Stufen einstellbar ist. Die elektrische Maschine ist dazu ausgebildet, beim rekuperativen Bremsen generatorisch betrieben zu werden und wenigstens einen Teil der kinetischen Energie des Fahrzeugs in elektrische Energie umzuwandeln und in einem Speicher für elektrische Energie zu speichern.

Es werden somit eine Reihe von Vorteilen erzielt. Während bei herkömmlichen Dauerbremseinrichtungen, wie einem Retarder, die kinetische Energie des Fahrzeugs beim Dauerbremsen ungenutzt in Wärmeenergie umgewandelt wird, ermöglicht der Einsatz einer elektrischen Maschine beim Dauerbremsen die Rekuperation zumindest eines Teils der kinetischen Energie des Fahrzeugs. Da zunehmend Antriebssysteme als hybride Antriebssysteme oder rein elektrische Antriebssysteme ausgeführt sind, kann bei derartigen Antriebssystemen die sowieso vorhandene elektrische Maschine zugleich auch als Dauerbremse verwendet werden. Dadurch können herkömmliche Dauerbremsen, wie Retarder, entweder entfallen oder diese kleiner dimensioniert werden, wenn die elektrische Maschine beim Dauerbremsen zusätzlich zu herkömmlichen Dauerbremssystemen eingesetzt wird.

Die mindestens eine elektrische Maschine der Dauerbremseinrichtung kann im Nicht-Dauerbremsbetrieb auch motorisch betrieben werden und so als Antrieb, beispielsweise als Hilfsantrieb, genutzt werden. Die mindestens eine elektrische Maschine der Dauerbremseinrichtung kann auch als Betriebsbremse eingesetzt werden.

Ein besonderer Aspekt und Vorteil der Erfindung liegt jedoch darin, dass der generatorische Betrieb der elektrischen Maschine über eine von einer Bedienperson bedienbare Eingabeeinrichtung auf einfache Weise bei Bedarf gesteuert werden kann. Hierbei kann die Eingabeeinrichtung insbesondere derart ausgeführt sein, dass hierüber vorbestimmte Bremsstufen für den Dauerbremsbetrieb angefordert werden können. Falls die Eingabeeinrichtung beispielsweise als handbetätigter Bedienhebel ausgeführt ist, können vorbestimmte Auslenkpositionen und/oder Auslenkbewegungen des Bedienhebels vorbestimmten Bremsstufen zugeordnet sein.

Auf diese Weise kann beispielsweise ein Fahrer eine gestufte Bremswirkung der elektrischen Maschine bei Bedarf, z. B. beim Schubbetrieb auf einer Gefällestrecke, aktivieren, um das Fahrzeug abzubremsen oder auf einer vorbestimmten Fahrgeschwindigkeit zu halten, so dass der rekuperativen Bremsbetrieb der elektrischen Maschine vom Fahrer gezielt zugeschaltet und/oder dosiert werden kann. Ferner besteht die Möglichkeit, dass mittels der Eingabeeinrichtung diskrete Stufen, d. h. eine diskrete Erhöhung und Verringerung der Dauerbremsleistung, einstellbar sind und/oder eine stufenlose Erhöhung oder Verringerung der Dauerbremsleistung einstellbar ist.

Gemäß einer vorteilhaften Ausführungsform der Erfindung ist die Dauerbremsen-Steuereinrichtung ausgebildet, die mindestens eine elektrische Maschine derart anzusteuern, dass das aufzubringende Dauerbremsen-Bremsmoment verzögert und/oder rampenartig aufgebaut wird. Unter einer derartigen Verzögerung wird verstanden, dass durch die Dauerbremsen-Steuereinrichtung eine zusätzliche Latenzzeit bis zum Aufbau des gewünschten Dauerbremsmoments vorgeben und/oder eingestellt wird, so dass der Aufbau des Bremsmoments mit der elektrischen Maschine langsamer als technisch möglich erfolgt. Unter einer rampenartigen Einstellung oder Aufbau des Bremsmoments der elektrischen Maschine wird eine kontinuierliche Zunahme des Bremsmoments bis zum gewünschten Bremsmoment verstanden, so dass das Bremsmoment mit der elektrischen Maschine nicht ruckartig, sondern entsprechend dem rampenartigen Verlauf zeitlich verzögert aufgebaut wird.

Dadurch kann ein zu abruptes Abbremsen des Fahrzeugs beim Dauerbremsen vermieden werden. Es wird darauf hingewiesen, dass mit einer elektrischen Maschine wesentlich schneller ein Bremsmoment aufgebaut werden kann als mit einer herkömmlichen Dauerbremseinrichtung, wie beispielsweise mit einer Motorbremse oder einem Retarder, bei denen es funktionsbedingt erst verzögert zum Aufbau eines gewünschten Bremsmoments kommt. Die elektrische Maschine bietet den Vorteil, dass durch entsprechende Einstellung der Verzögerung oder des rampenartigen Aufbaus des Bremsmoments die Verzögerung gezielt und bedarfsgerecht eingestellt werden kann.

Insbesondere ist es besonders vorteilhaft, wenn eine Verzögerung der verzögerten Einstellung und/oder eine Steigung der rampenartige Einstellung des Dauerbremsen-Bremsmoments 40 in Abhängigkeit von einem aktuellen Fahrzeuggewicht, einem Ladungsgewicht und/oder einer Achslast bestimmt wird. Insbesondere kann das bestimmte Dauerbremsen-Bremsmoment derart verzögert und/oder rampenartig eingestellt und/oder aufgebaut werden, dass die Verzögerung umso geringer ist, je höher das Fahrzeuggewicht, das Ladungsgewicht und/oder die Achslast ist. Gerade bei Gliederzügen oder Fahrzeugverbänden kann das Fahrzeuggewicht sehr stark variieren, beispielsweise kann der Maschinenwagen leer sein und der Anhänger voll oder teilbeladen sein. Durch die Anpassung der Verzögerungszeit, mit der das Bremsmoment über die elektrische Maschine aufgebaut wird, kann das Dauerbremsverhalten des Fahrzeugs so eingestellt werden, dass das Kraftfahrzeug immer ein ähnliches Bremsverhalten zeigt, unabhängig vom Fahrzeuggewicht oder der Achslast.

Vorstehend wurde bereits erwähnt, dass das Kraftfahrzeug ein durch ein Zugfahrzeug und ein Anhängerfahrzeug gebildeter Fahrzeugverband oder Gliederzug ist, wobei das Anhängerfahrzeug ein Sattelauflieger und/oder ein Anhänger ist. Hierbei steht mindestens eine Starrachse des Fahrzeugverbunds, vorzugsweise eine Nachlaufachse, Vorlaufachse, Liftachse und/oder eine Anhängerachse, in Antriebsverbindung mit einer oder zwei elektrischen Maschinen der Dauerbremse, die somit einen Hilfsantrieb für die jeweilige Starrachse ausbilden, um diese zu beschleunigen (motorischer Betrieb der mindestens einen elektrischen Maschine) oder abzubremsen (generatorischer Betrieb der mindestens einen elektrischen Maschine).

Gemäß einer vorteilhaften Variante dieser Ausführungsform weisen mindestens zwei der Starrachsen des Kraftfahrzeugs jeweils einen derartigen Hilfsantrieb der Dauerbremse auf, wobei die Dauerbremsen-Steuereinrichtung ausgebildet ist, in Abhängigkeit von der mittels der Eingabeeinrichtung eingestellten Verzögerungsanforderung, z. B. in Abhängigkeit von der mittels der Eingabeeinrichtung eingestellten Stufe der Fahrzeug-Verzögerungsanforderung, die bestimmte Dauerbremsen-Bremsanforderung in Teilkomponenten für die einzelnen elektrischen Hilfsantriebe aufzuteilen. Auf diese Weise kann das aufzubringende Bremsmoment auf mehrere Starrachsen aufgeteilt werden, was das Fahrverhalten verbessert. Die Aufteilung in Teilkomponenten kann derart erfolgen, dass die unterschiedlichen elektrischen Maschinen und/oder elektrischen Hilfsantriebe jeweils nur einen Teil der bestimmten Dauerbremsen-Bremsanforderungen aufbringen und/oder dass je nach Höhe der angeforderten Bremsleistung nacheinander zusätzliche Hilfsantriebe an unterschiedlichen Starrachsen zugeschaltet werden, um die Bremsleistung zu erhöhen.

Hierbei besteht die Möglichkeit, dass die einen Hilfsantrieb ausbildende elektrische Maschine der Dauerbremse als Radnabenantrieb der Starrachse ausgeführt ist. Eine weitere Möglichkeit ist, dass die einen Hilfsantrieb ausbildende elektrische Maschine zwischen den Rädern der Starrachse, vorzugsweise im Achskörper der Starrachse, angeordnet ist und mit der Antriebswelle in Antriebsverbindung steht und/oder über eine Übersetzungseinrichtung und/oder ein Differentialgetriebe mit der Antriebswelle in Antriebsverbindung steht.

Erfindungsgemäß weist das Kraftfahrzeug eine Liftachse mit dem elektrischen Hilfsantrieb auf, d. h., das Kraftfahrzeug weist eine Liftachse auf, die in Antriebsverbindung mit wenigstens einer elektrischen Maschine der Dauerbremse steht. Hierbei wird die Liftachse bei Einstellung einer Fahrzeug-Verzögerungsanforderung an der Eingabeeinrichtung der Dauerbremsvorrichtung abgesenkt, falls diese im angehobenen Zustand ist. Mit anderen Worten wird eine angehobene Liftachse zur Durchführung eines Dauerbremsbetriebs abgesenkt.

Gemäß einem weiteren vorteilhaften Aspekt ist die Dauerbremsvorrichtung ausgeführt, eine Beschleunigung der Liftachse beim Absenken mittels des elektrischen Hilfsantriebs zu veranlassen, so dass die Liftachse vor Erreichen der Fahrbahn beschleunigt wird, insbesondere auf die aktuelle Raddrehzahl der Nicht-Liftachsen des Fahrzeugs. Durch diese Maßnahme kann der Reifenverschleiß an der Liftachse verringert werden, wenn diese im Fahrbetrieb abgesenkt wird.

Gemäß einem weiteren Aspekt kann die Dauerbremse zur Erzeugung eines Bremsmoments ferner eine rekuperative Hydraulikbremsanlage umfassen. Derartige rekuperative Hydraulikbremsanlagen sind an sich aus dem Stand der Technik bekannt, siehe beispielsweise die Offenlegungsschrift DE 10 2008 054 446 A1. Gemäß diesem Aspekt ist die Dauerbremsen-Steuereinrichtung ausgebildet, die bestimmte Dauerbremsen-Bremsanforderung aufzuteilen in eine Komponente, die von der mindestens einen elektrischen Maschine aufzubringen ist, und in eine Komponente, die von der rekuperativen Hydraulikbremsanlage aufzubringen ist. Gemäß einem weiteren Aspekt kann die Dauerbremse zur Erzeugung eines Bremsmoments eine Motorbremse und/oder einen Retarder umfassen. Gemäß diesem Aspekt ist die Dauerbremsen-Steuereinrichtung ausgebildet, die bestimmte Dauerbremsen-Bremsanforderung aufzuteilen in eine Komponente, die von der mindestens einen elektrischen Maschine aufzubringen ist, und in eine Komponente, die von der Motorbremse und/oder dem Retarder aufzubringen ist.

Vorzugsweise erfolgt die Aufteilung in die einzelnen Komponenten derart, dass die Summe der von den einzelnen Bremskomponenten der Dauerbremse bereitgestellten Bremsmomente der in Abhängigkeit von der ausgewählten Fahrzeug-Verzögerungsanforderung bestimmten Dauerbremsen-Bremsanforderung entspricht.

Eine weitere Möglichkeit der erfindungsgemäßen Realisierung sieht vor, dass die Dauerbremsen-Steuereinrichtung ausgebildet ist, bei Bedarf eine Anti-Blockier-Bremsung durchzuführen, bei welcher das mittels der mindestens einen elektrischen Maschine auf ein Rad des Fahrzeugs aufzubringende Dauerbremsen-Bremsmoment zumindest zeitweise auf null oder auf einen vorgebbaren Wert begrenzt wird, um dadurch ein Blockieren des Rads relativ zur Fahrbahn zumindest zeitweise zu verhindern. Hierdurch kann die Fahrsicherheit erhöht werden. Die Blockierung oder die drohende Blockierung eines Rades kann mittels gängiger Überwachungstechniken, z. B. Raddrehzahlsensoren, realisiert werden. Wenn beispielsweise eine Raddrehzahl an einer von einer elektrischen Maschine der Dauerbremse abgebremsten Achse unter einen vorbestimmten Schwellenwert fällt, kann die Bremsleistung der elektrischen Maschine temporär reduziert oder unterbrochen werden, um ein Blockieren des Rades zu verhindern.

Weitere Einzelheiten und Vorteile der Erfindung werden im Folgenden unter Bezug auf die beigefügten Zeichnungen beschrieben. Es zeigen:
- Figur 1: schematisch ein Blockdiagram einer Dauerbremsvorrichtung gemäß einem Ausführungsbeispiel;
- Figur 2: eine Seitenansicht eines Gliederzugs;
- Figuren 4 bis 7: unterschiedliche Ausführungsvariante zur Realisierung eines elektrischen Hilfsantriebs als Teil der Dauerbremsvorrichtung; und
- Figur 8: beispielhaft einen rampenartigen Aufbau eines Dauerbremsmoments mithilfe einer elektrischen Maschine der Dauerbremsvorrichtung gemäß einer Ausführungsform; und
- Figur 9: beispielhaft eine Aufteilung der Dauerbremsen-Bremsanforderung in mehrere Komponenten gemäß einer Ausführungsform.

Gleiche oder funktional äquivalente Elemente sind in allen Figuren mit denselben Bezugszeichen bezeichnet und werden zum Teil nicht gesondert beschrieben.

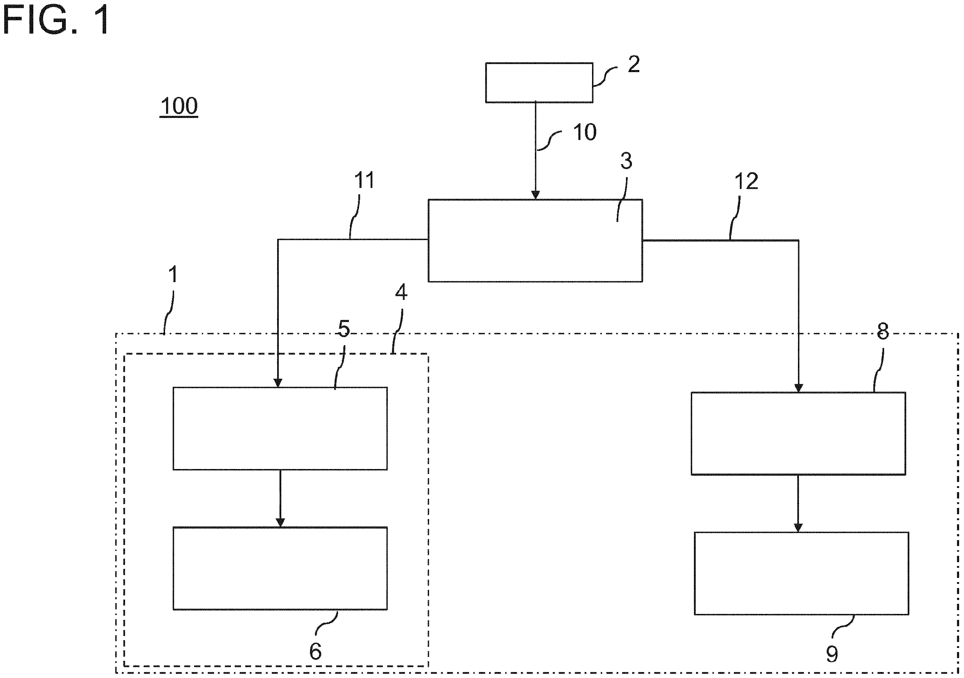

Figur 1 zeigt schematisch ein Blockdiagram einer Dauerbremsvorrichtung 100 eines Kraftfahrzeugs gemäß einem Ausführungsbeispiel.

Die Dauerbremsvorrichtung 100 umfasst eine Eingabeeinrichtung 2 zur Ansteuerung der Dauerbremse durch eine Bedienperson, mittels derer eine Fahrzeug-Verzögerungsanforderung 10 einstellbar ist. Die Dauerbremsvorrichtung 100 umfasst ferner eine Steuereinrichtung 3 zur Ansteuerung der Dauerbremse 1, die ausgebildet ist, in Abhängigkeit von der eingestellten Fahrzeug-Verzögerungsanforderung 10 eine Dauerbremsen-Bremsanforderung, die ein von der Dauerbremse 1 aufzubringendes Dauerbremsen-Bremsmoment kodiert, zu bestimmen. Die Dauerbremsvorrichtung 100 umfasst ferner eine Dauerbremse 1, die eine zum rekuperativen Bremsen ausgeführte elektrische Maschine 6 aufweist, deren Dauerbremsmoment mittels der Eingabeeinrichtung 2 in Stufen einstellbar ist.

Die Eingabeeinrichtung 2 kann insbesondere ein Handbetätigungselement, z. B. einen Lenkstockhebel, aufweisen. Möchte der Fahrer die Dauerbremsfunktion aktivieren, beispielsweise bei Fahrt auf einer langen Gefällestrecke, kann er durch Betätigung der Eingabeeinrichtung 2 ein Signal erzeugen, hier als Fahrzeug-Verzögerungsanforderung 10 bezeichnet, das an die Steuereinrichtung 3 der Dauerbremsvorrichtung zur Ansteuerung der Dauerbremse 1 übermittelt wird. Die Eingabeeinrichtung 2 ist insbesondere so ausgeführt, dass mittels vorbestimmter Bedieneingaben Signale 10 erzeugbar sind, anhand derer die Steuervorrichtung 3 gestufte Bremsmomente der Dauerbremsvorrichtung 1 einstellt.

Die Dauerbremsen-Steuereinrichtung 3 der Dauerbremsvorrichtung ist ausgebildet, in Abhängigkeit von der eingestellten Fahrzeug-Verzögerungsanforderung 10 eine Dauerbremsen-Bremsanforderung 11, die ein von der Dauerbremse 1 aufzubringendes Dauerbremsen-Bremsmoment kodiert, zu bestimmen, welche an eine Steuerung 5 der mindestens einen elektrischen Maschine 6 übermittelt wird. Die Steuereinrichtung 3 kann als integraler Bestandteil einer anderen Steuerung, beispielsweise einer zentralen Steuereinheit, oder als eigenständige Steuereinheit ausgeführt sein.

Die Steuerung 5 ist ausgebildet, in Abhängigkeit von der empfangen Bremsanforderung 11 die elektrische Maschine 6 im generatorischen Betrieb so anzusteuern, dass ein Bremsmoment in Höhe der angeforderten Bremsanforderung 11 erzeugt wird.

Wie vorstehend bereits erwähnt, kann die Dauerbremse 1 optional ferner eine oder mehrere herkömmliche Dauerbremseinrichtungen 9 aufweisen, wie beispielsweise eine Motorbremse, einen Retarder und/oder eine rekuperative Hydraulikbremsanlage, die jeweils über einen Regler 8 oder eine Steuerung angesteuert werden.

In diesem Fall entscheidet die Steuereinrichtung 3, ob und wie die Gesamtbremsanforderung, die sich aus dem Ausgangssignal 10 der Eingabeeinrichtung 2 ergibt, auf die unterschiedlichen Komponenten der Dauerbremse 1 aufgeteilt wird. Entsprechend erzeugt die Steuereinrichtung 3 jeweils separate Bremsanforderungen 11, 12 für die unterschiedlichen Komponenten der Dauerbremse 1. Die Aufteilung in die einzelnen Komponenten 11, 12 erfolgt derart, dass die Summe der von den einzelnen Bremskomponenten 6, 9 der Dauerbremse bereitgestellten Bremsmomente der in Abhängigkeit von der ausgewählten Fahrzeug-Verzögerungsanforderung 10 bestimmten Dauerbremsen-Bremsanforderung entspricht.

Die Dauerbremse 1 kann jedoch auch weitere elektrische Maschinen 6 aufweisen, die an unterschiedlichen Achsen des Fahrzeugs angeordnet sind, was nachfolgend noch beschrieben wird. Auch können an einer Achse zwei elektrische Maschinen angeordnet sein, z. B. in Form von Radnabenmotoren, was nachfolgend noch erläutert wird.

Kommen mehrere elektrische Maschinen als Dauerbremsen zum Einsatz, ist die Dauerbremsen-Steuereinrichtung 3 ausgebildet, in Abhängigkeit von der eingestellten Stufe der Fahrzeug-Verzögerungsanforderung 10 die bestimmte Dauerbremsen-Bremsanforderung 11 in Teilkomponenten für die einzelnen elektrischen Hilfsantriebe aufzuteilen.

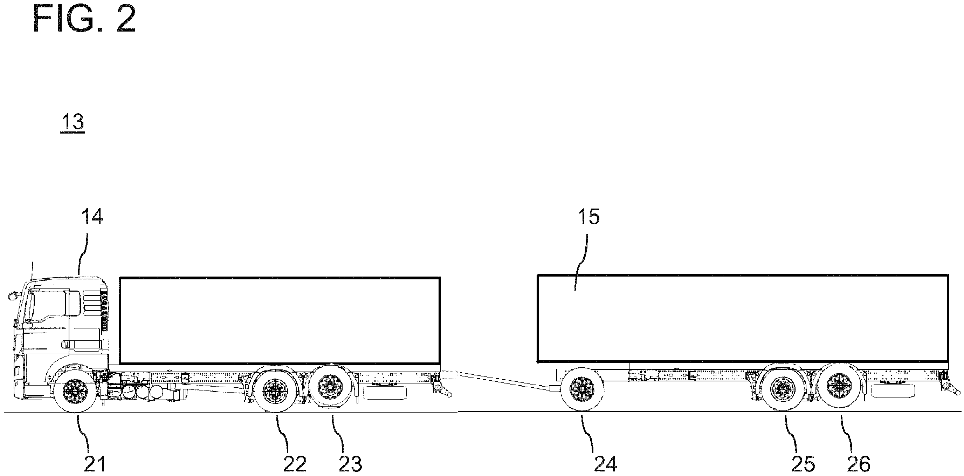

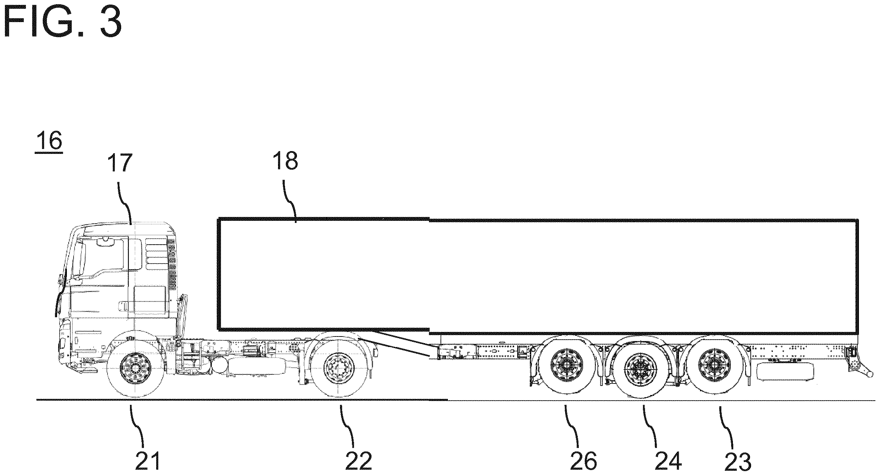

Das Kraftfahrzeug gemäß Ausführungsbeispiel ist ein Nutzfahrzeug, z. B. ein Gliederzug 13 oder ein Sattelzug 16, wie in den Figuren 2 und 3 beispielhaft dargestellt.

Der in Figur 2 dargestellte Gliederzug 13 weist ein Zugfahrzeug 14 und ein Anhängerfahrzeug 15 auf. Das Zugfahrzeug 14 hat eine lenkbare Vorderachse 21, eine über eine Antriebswelle mit einer Brennkraftmaschine gekoppelte Antriebsachse 22 sowie eine lenkbare Liftachse 23, die in Figur 2 im angehobenen Zustand gezeigt ist. Das Anhängerfahrzeug 15 hat eine Drehschemelachse 24 und eine starre Achse 25, der ferner eine starre Liftachse nachgeordnet ist, die in Figur 2 im angehobenen Zustand gezeigt ist.

Das Zugfahrzeug 17 des in Figur 3 dargestellten Sattelzuges 16 hat eine lenkbare Vorderachse 21 sowie eine über eine Antriebswelle mit einer Brennkraftmaschine gekoppelte Antriebsachse 22. Der Sattelauflieger 18 hat eine vordere starre Liftachse 26, eine Starrachse 24 und eine hintere lenkbare Liftachse 23. Die beiden Liftachsen 23 und 26 sind wiederum im angehobenen Zustand dargestellt. Die in den Figuren 2 und 3 dargestellten Achskonfigurationen sind lediglich beispielhaft.

Erfindungsgemäß ist an einer oder mehreren der in den Figuren 2 und 3 dargestellten Achsen jeweils mindestens ein elektrischer Hilfsantrieb angeordnet ist. Erfindungsgemäß weist eine Liftachse, einen elektrischen Hilfsantrieb auf, der zum rekuperativen Bremsen von der Dauerbremsvorrichtung genutzt wird. Insbesondere können auch die Nachlauf und Vorlaufachsen, die normalerweise nicht angetrieben sind, einen elektrischen Hilfsantrieb aufweisen, der zum rekuperativen Bremsen von der Dauerbremsvorrichtung genutzt wird.

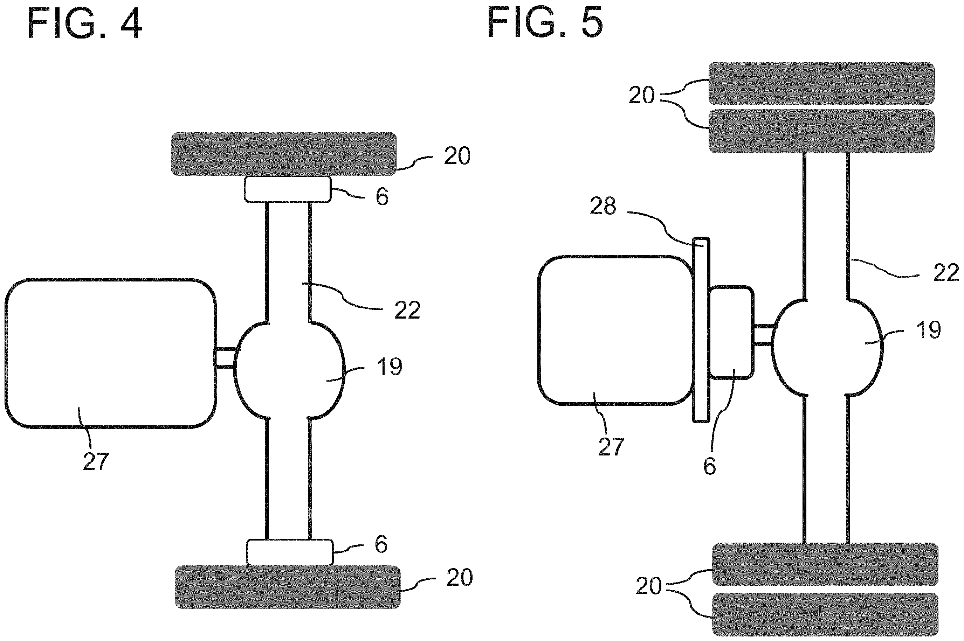

Unterschiedliche Ausführungsvarianten hierfür sind in den Figuren 4 bis 7 dargestellt.

So zeigt die Figur 4 eine Variante, bei der eine Antriebsachse 22 des Kraftfahrzeugs zwei Radnabenmotoren 6 aufweist, die jeweils das ihnen zugeordnete Rad 20 antreiben oder abbremsen können. Die Antriebsachse 22 ist ferner von einer Brennkraftmaschine, insbesondere einem Verbrennungsmotor 27, antreibbar, der über ein Differentialgetriebe 19 in Antriebsverbindung mit der Antriebsachse 22 steht.

Bei der in Figur 5 dargestellten Variante wird die Antriebsachse 22 wiederum vom Verbrennungsmotor 27 über ein Differentialgetriebe 19 angetrieben. Auf der Abtriebsseite des Verbrennungsmotors 27 ist eine elektrische Maschine 6 angeordnet, die über die Kupplung 27 mit dem Verbrennungsmotor 27 koppelbar ist. Die elektrische Maschine 6 steht ebenfalls über das Differentialgetriebe 19 in Antriebsverbindung mit der Antriebsachse 22. Beim Dauerbremsbetrieb wird die Kupplung 28 geöffnet und die elektrische Maschine 6 generatorisch betrieben, so dass keine Antriebsverbindung zwischen Verbrennungsmotor 17 und elektrischer Maschine 6 besteht.

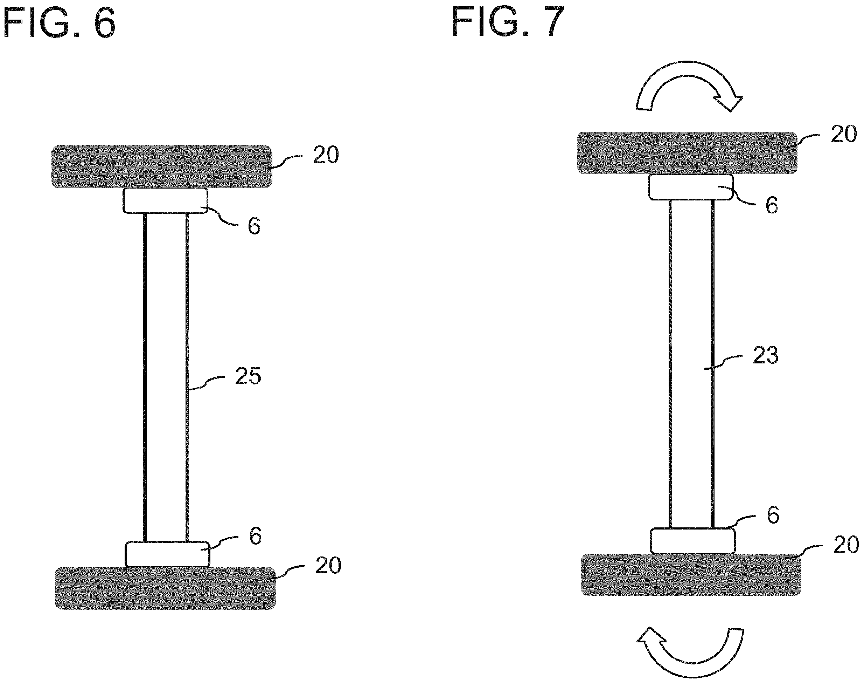

Bei der in Figur 6 dargestellten Variante wird eine starre Achse 25, die beispielsweise als starre Liftachse ausgeführt sein kann, von zwei elektrischen Radnabenmotoren 6 angetrieben, die an gegenüberliegenden stirnseitigen Enden der Achse 25 angeordnet sind. Die in Figur 7 dargestellte Variante entspricht der in Figur 6 dargestellten Variante bis auf den Unterschied, dass die von den Radnabenmotoren 6 angetriebene Starrachse 23 als lenkbare Achse ausgeführt ist. Dies ist durch die beiden Pfeile schematisch illustriert. Die Achse 23 kann wiederum als Liftachse ausgeführt sein.

Die Figuren 4 bis 7 zeigen lediglich stark schematisiert die unterschiedlichen Konstruktionsprinzipien zur Ausbildung eines elektrischen Hilfsantriebs auf Basis einer Maschine oder mehrerer elektrischer Maschinen 6, die an unterschiedlichen Achsen insbesondere eines Fahrzeuggespanns anordenbar ist oder sind. Zur Verdeutlichung des Konstruktionsprinzips sind die weiteren in üblicherweise ausgeführten Komponenten des elektrischen Hilfsantriebs, wie ein Energiespeicher für elektrische Energie sowie entsprechende elektrische Leitungen, nicht dargestellt. Der elektrische Energiespeicher versorgt die elektrische Maschine 6 im motorischen Betrieb mit elektrischer Energie und nimmt elektrische Energie auf, wenn die elektrische Maschine 6 generatorisch betrieben wird.

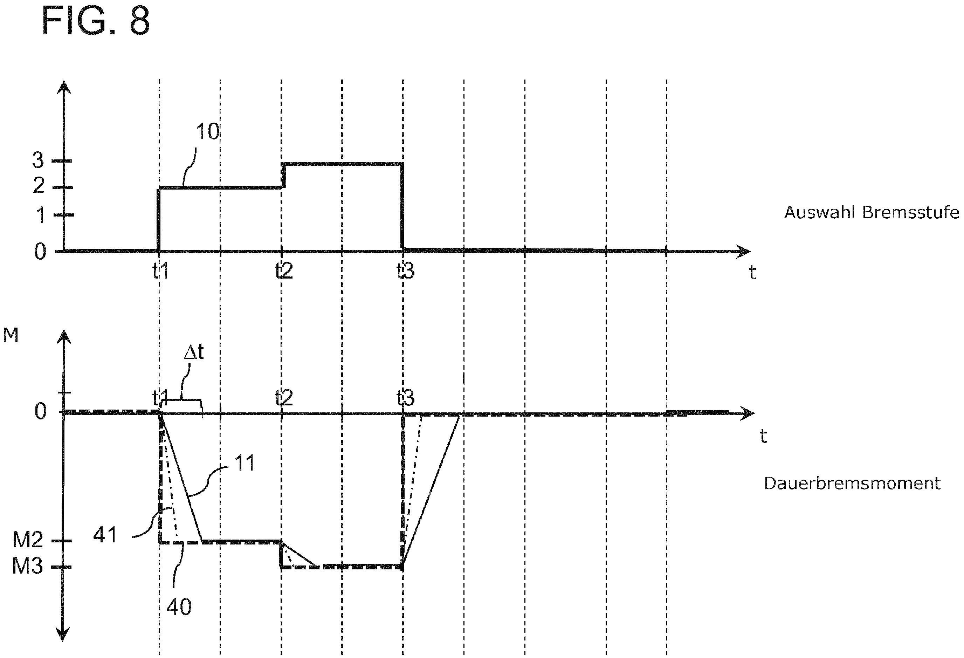

Figur 8 illustriert beispielhaft einen rampenartigen Aufbau eines Dauerbremsmoments mithilfe einer elektrischen Maschine 6 der Dauerbremsvorrichtung. Hierbei wird davon ausgegangen, dass die Dauerbremse 1 der Dauerbremsvorrichtung lediglich durch eine elektrische Maschine gebildet ist, z. B. gemäß Figur 4. Das obere Diagramm in Figur 8 illustriert beispielhaft die Auswahl unterschiedlicher Dauerbremsstufen durch Auswahl der Fahrzeug-Verzögerungsanforderung an der Eingabeeinrichtung 2. Die Ordinatenachse zeigt hierbei die ausgewählte Dauerbremsstufe an. Der Wert "0" bedeutet, dass kein Dauerbremsmoment von der Eingabeeinrichtung 2 angefordert wird. Die Dauerbremsfunktion ist somit deaktiviert. Die Werte "1", "2" und "3" entsprechen jeweils unterschiedlich starken, diskreten Dauerbremsstufen. Die Abszissenachse zeigt den zeitlichen Verlauf der ausgewählten Bremsstufe.

Das untere Diagramm in Figur 8 illustriert den zeitlichen Verlauf der erzeugten Dauerbremsen-Bremsanforderung und damit des erzeugten Dauerbremsen-Bremsmoments, dargestellt auf der Ordinatenachse, das mittels einem generatorischen Betrieb der elektrischen Maschine 6 erzeugt wird. Die gestrichelte Linie 40 gibt dabei das Soll-Dauerbremsmoment an, das der ausgewählten Bremsstufe 10 entspricht. Die durchgezogene Linie 11 gibt den tatsächlichen Verlauf der von der Steuereinrichtung 3 erzeugten Dauerbremsen-Bremsanforderung 11 und damit des an der zugeordneten Dauerbremse erzeugten Dauerbremsmoments an, wie es von der Steuereinrichtung 3 erzeugt wird. Die Linie 11 zeigt eine Fahrsituation, bei der die Achse, an der die elektrische Maschine angeordnet ist, eine erste Achslast aufweist. Die strichgepunktete Linie 41 gibt den tatsächlichen Verlauf der von der Steuereinrichtung 3 erzeugten Dauerbremsen-Bremsanforderung und damit des erzeugten Dauerbremsmoments an der zugeordneten Dauerbremse für eine Fahrsituation an, bei der die Achse, an der die elektrische Maschine angeordnet ist, eine zweite Achslast aufweist, die im Vergleich zur ersten Achslast höher ist.

Vor dem Zeitpunkt t1 ist die Dauerbremse deaktiviert. Zum Zeitpunkt t1 fordert der Benutzer eine Fahrzeug-Verzögerungsanforderung 10 der Stufe "2" an der Eingabeeinrichtung 2 an, was im oberen Diagramm der Figur 8 dargestellt ist. Die Steuereinrichtung 3 bestimmt in Abhängigkeit von der ausgewählten Fahrzeug-Verzögerungsanforderung 10 eine Höhe M2 der Dauerbremsen-Bremsanforderung 40. Der Wert M2 wird jedoch mit einer bewussten Verzögerung Δt verzögert eingestellt bzw. rampenartig angefahren, was durch den rampenartigen Anstieg des Dauerbremsmoments 11 nach dem Zeitpunkt t1 gezeigt ist. Der so bestimmte Verlauf der Dauerbremsen-Bremsanforderung 11 wird dann von der Steuereinrichtung 3 an die Steuerung 5 der elektrischen Maschine 6 übermittelt.

Im Zeitpunkt t2 fordert der Benutzer über die Eingabeeinrichtung 2 eine Fahrzeug-Verzögerungsanforderung 10 der Stufe "3" an. Entsprechend bestimmt die Steuereinrichtung 3 den geänderten Wert M3 für die Dauerbremsen-Bremsanforderung 40 und den zeitlichen Verlauf der Dauerbremsen-Bremsanforderung 11, wobei der Wert M3 wieder verzögert eingestellt wird. Im Zeitpunkt t3 wird die Dauerbremseinrichtung vom Benutzer wieder deaktiviert, z. B. am Ende einer Gefällestrecke. Entsprechend wird das erzeugte Dauerbremsmoment von M3 wieder auf null zurückgefahren.

Die Steuereinrichtung 3 ist jedoch eingerichtet, die verzögerte und/oder rampenartige Einstellung des Dauerbremsen-Bremsmoments 11 in Abhängigkeit von einem aktuellen Fahrzeuggewicht, einem aktuellen Ladungsgewicht und/oder einer aktuellen Achslast festzulegen. Die strichgepunktete Linie 41 zeigt einen korrespondierenden Verlauf der bestimmten Dauerbremsen-Bremsanforderung 41, der sich im Vergleich zum Verlauf 11 ergibt, wenn die Achse, an der die elektrische Maschine 6 der Dauerbremse angeordnet ist, eine höhere Achslast aufweist. Dann erfolgt ein steilerer rampenartiger Anstieg.

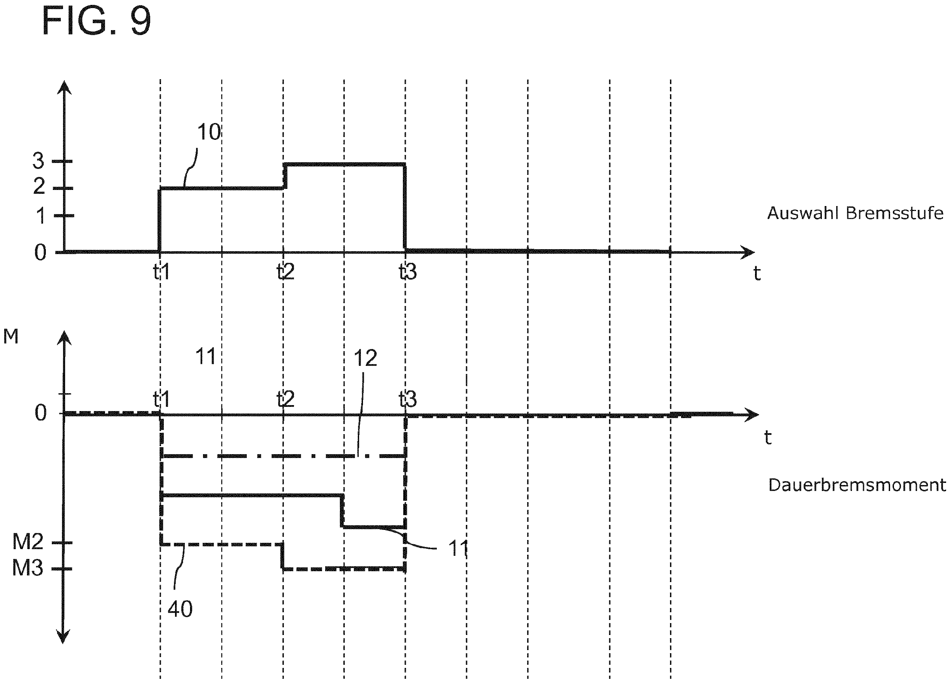

Figur 9 illustriert beispielhaft eine Aufteilung der Dauerbremsen-Bremsanforderung in mehrere Komponenten. Das obere Diagramm in Figur 8 illustriert beispielhaft die Auswahl unterschiedlicher Dauerbremsstufen durch Auswahl der Fahrzeug-Verzögerungsanforderung an der Eingabeeinrichtung 2. Das untere Diagramm in Figur 8 illustriert wiederum den zeitlichen Verlauf des erzeugten Dauerbremsmoments, dargestellt auf der Ordinatenachse. Bei dem in Figur 9 dargestellten Beispiel umfasst die Dauerbremse 1 eine elektrische Maschine 6 sowie die rekuperative Hydraulikbremsanlage 9, wie in Figur 1 beschrieben. Die Steuereinrichtung 3 bestimmt wiederum den Wert des Dauerbremsmoments M in Abhängigkeit von der ausgewählten Bremsstufe 10. Der zeitliche Verlauf dieses Wertes ist in Figur 9 durch die gestrichelte Kurve 40 dargestellt. Da die Dauerbremse 1 nun zwei Bremskomponenten aufweist, ist die Steuereinrichtung 3 ausgebildet, die Dauerbremsen-Bremsanforderung aufzuteilen, in eine Komponente 11, die von der mindestens einen elektrischen Maschine 6 aufzubringen ist, und in eine Komponente 12, die von der rekuperativen Hydraulikbremsanlage 9 aufzubringen ist. In dem in Figur 9 gezeigten Beispiel ist diese Aufteilung derart, dass die rekuperative Hydraulikbremsanlage 9 sowohl bei der ausgewählten Dauerbremsstufe 2 als auch bei der Brennstufe 3 jeweils das gleiche Bremsmoment aufzubringen hat, während über die elektrische Maschine die Änderung in der ausgewählten Bremsstufe ausgeglichen wird, so dass die elektrische Maschine im Zeitraum t2 bis t3 ein höheres Bremsmoment als im Zeitraum t1 bis t2 aufzubringen hat.

Die Darstellung der Figur 9 ist jedoch lediglich beispielhaft, und es sind unterschiedliche Ausführungsvarianten denkbar. Beispielsweise könnten die unterschiedlichen Dauerbremsen so angesteuert werden, dass diese unabhängig von den ausgewählten Bremsstufen immer anteilig gleich zum gesamten Dauerbremsmoment beitragen. Ferner ist es denkbar, dass verschiedene Komponenten der Dauerbremseinrichtung sukzessive zugeschaltet werden, wenn die ausgewählte Bremsstufe so hoch ist, dass die bisherigen aktivierten Komponenten der Dauerbremse nicht ausreichen, um das geforderte Dauerbremsmoment aufzubringen. Besteht die Dauerbremse aus mehreren elektrischen Maschinen, die beispielsweise an unterschiedlichen Achsen des Fahrzeugs angeordnet sind, sieht eine weitere Variante vor, dass die Steuereinrichtung 3 ausgeführt ist, ein Gesamtdauerbremsmoment zu bestimmen, das von der Gesamtheit der elektrischen Maschinen der Dauerbremse aufzubringen ist, und in einem zweiten Schritt dann dieses Gesamtdauerbremsmoment der Gesamtheit der elektrischen Maschinen in einzelne Komponenten zu unterteilen, die jeweils von den einzelnen elektrischen Maschinen aufzubringen sind.

Obwohl die Erfindung unter Bezugnahme auf bestimmte Ausführungsbeispiele beschrieben worden ist, ist es für einen Fachmann ersichtlich, dass verschiedene Änderungen ausgeführt werden können ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Dauerbremse
- 2: Eingabeeinrichtung, z. B. Bedienhebel
- 3: Steuereinrichtung
- 5: Steuerung oder Regler der elektrischen Maschine
- 6: Elektrische Maschine
- 8: Steuerung oder Regler der rekuperativen Hydraulikbremsanlage
- 9: Rekuperative Hydraulikbremsanlage
- 10: Fahrzeug-Verzögerungsanforderung
- 11: Dauerbremsen-Bremsanforderung, Verlauf des Dauerbremsmoments bei erster Achslast
- 12: Dauerbremsen-Bremsanforderung
- 13: Gliederzug
- 14, 17: Zugfahrzeug
- 15: Anhänger
- 16: Sattelzug
- 18: Sattelauflieger
- 19: Differentialgetriebe
- 20: Reifen
- 21: Lenkbare Vorderachse
- 22: Antriebsachse
- 23: Lenkbare Liftachse
- 24: Drehschemelachse
- 25: Starrachse
- 26: Starre Liftachse
- 27: Brennkraftmaschine
- 28: Kupplung
- 40: Soll-Dauerbremsmoment
- 41: Dauerbremsen-Bremsanforderung, Verlauf des Dauerbremsmoments bei zweiter Achslast
- 100: Dauerbremsvorrichtung

## Patentansprüche

1. Kraftfahrzeug umfassend eine Dauerbremsvorrichtung (100), umfassend
eine Dauerbremse (1);
eine Eingabeeinrichtung (2), mittels derer eine Fahrzeug-Verzögerungsanforderung (10) einstellbar ist, insbesondere in Stufen einstellbar ist; und
eine Dauerbremsen-Steuereinrichtung (3) zur Ansteuerung der Dauerbremse (1), die ausgebildet ist, in Abhängigkeit von der eingestellten Fahrzeug-Verzögerungsanforderung (10) eine Dauerbremsen-Bremsanforderung (11, 12), die ein von der Dauerbremse (1) aufzubringendes Dauerbremsen-Bremsmoment (40) kodiert, zu bestimmen;
wobei die Dauerbremse (1) mindestens eine zum rekuperativen Bremsen ausgeführte elektrische Maschine (6) aufweist, wobei
das Kraftfahrzeug ein durch ein Zugfahrzeug (14, 17) und ein Anhängerfahrzeug gebildeter Fahrzeugverband (13, 16) ist, wobei das Anhängerfahrzeug ein Sattelauflieger (18) und/oder ein Anhänger (15) ist, wobei mindestens eine Starrachse des Fahrzeugverbunds, vorzugsweise eine Nachlaufachse, Vorlaufachse, Liftachse und/oder eine Anhängerachse, zur Ausbildung eines Hilfsantriebs für die jeweilige Starrachse in Antriebsverbindung mit einer oder zwei elektrischen Maschinen der Dauerbremse stehen, **dadurch gekennzeichnet,**
**dass** das Kraftfahrzeug eine Liftachse (23, 26) mit dem elektrischen Hilfsantrieb aufweist, die bei Einstellung einer Fahrzeug-Verzögerungsanforderung der Dauerbremsvorrichtung abgesenkt wird, falls diese im angehobenen Zustand ist.

2. Kraftfahrzeug nach Anspruch 1, wobei die Dauerbremsen-Steuereinrichtung (3) ausgebildet ist, die mindestens eine elektrische Maschine (6) derart anzusteuern, dass das aufzubringende Dauerbremsen-Bremsmoment (40) verzögert und/oder rampenartig aufgebaut wird.

3. Kraftfahrzeug nach Anspruch 2, wobei eine Verzögerung der verzögerten Einstellung und/oder eine Steigung der rampenartige Einstellung des Dauerbremsen-Bremsmoments (40) in Abhängigkeit von einem aktuellen Fahrzeuggewicht, einem Ladungsgewicht und/oder einer Achslast bestimmt wird.

4. Kraftfahrzeug nach einem der vorhergehenden Ansprüche, wobei mindestens zwei der Starrachsen des Kraftfahrzeugs jeweils einen derartigen Hilfsantrieb der Dauerbremse aufweisen und wobei mittels der Eingabeeinrichtung (2) diskrete Stufen der Fahrzeug-Verzögerungsanforderung einstellbar sind, wobei die Dauerbremsen-Steuereinrichtung (3) ausgebildet ist, in Abhängigkeit von der eingestellten Stufe der Fahrzeug-Verzögerungsanforderung (10) die bestimmte Dauerbremsen-Bremsanforderung (11) in Teilkomponenten für die einzelnen elektrischen Hilfsantriebe aufzuteilen.

5. Kraftfahrzeug nach einem der vorhergehenden Ansprüche, wobei die einen Hilfsantrieb ausbildende elektrische Maschine (6)
a) als Radnabenantrieb der Starrachse ausgeführt ist; oder
b1) zwischen den Rädern der Starrachse, vorzugsweise im Achskörper der Starrachse, angeordnet ist und mit der Antriebswelle in Antriebsverbindung steht; und/oder
b2) über eine Übersetzungseinrichtung und/oder ein Differentialgetriebe (19) mit der Antriebswelle in Antriebsverbindung steht.

6. Kraftfahrzeug nach einem der vorhergehenden Ansprüche, wobei die Liftachse beim Absenken mittels des elektrischen Hilfsantriebs vor Erreichen der Fahrbahn beschleunigt wird, insbesondere auf die aktuelle Raddrehzahl der Nicht-Liftachsen des Kraftfahrzeugs.

7. Kraftfahrzeug nach einem der vorhergehenden Ansprüche, wobei die Dauerbremse
a) eine rekuperative Hydraulikbremsanlage umfasst und die Dauerbremsen-Steuereinrichtung (3) die bestimmte Dauerbremsen-Bremsanforderung aufteilt, in eine Komponente (11), die von der mindestens einen elektrischen Maschine (6) aufzubringen ist, und in eine Komponente (12), die von der rekuperativen Hydraulikbremsanlage (9) aufzubringen ist; und/oder
b) eine Motorbremse und/oder einen Retarder umfasst und die Dauerbremsen-Steuereinrichtung die bestimmte Dauerbremsen-Bremsanforderung aufteilt, in eine Komponente, die von der mindestens einen elektrischen Maschine aufzubringen ist, und in eine Komponente, die von der Motorbremse und/oder dem Retarder aufzubringen ist.

8. Kraftfahrzeug nach einem der vorhergehenden Ansprüche, wobei die Dauerbremsen-Steuereinrichtung (3) ausgebildet ist, bei Bedarf eine Anti-Blockier-Bremsung durchzuführen, bei welcher mittels der mindestens einen elektrischen Maschine ein auf ein Rad des Kraftfahrzeugs aufzubringendes Dauerbremsen-Bremsmoment zumindest zeitweise auf null oder auf einen vorgebbaren Wert begrenzt wird, um dadurch ein Blockieren des Rads relativ zur Fahrbahn zumindest zeitweise zu verhindern.

9. Kraftfahrzeug nach einem der vorhergehenden Ansprüche, wobei die Eingabeeinrichtung (2) als Handbetätigungselement, Bedienhebel, Lenkstockhebel, Eingabedisplay und/oder als Sprachbedienung ausgeführt ist.

## Claims

1. A motor vehicle comprising a retarder apparatus (100) comprising
a retarder (1);
an input device (2) by means of which a vehicle deceleration demand (10) can be set, in particular can be set in steps, and
a retarder control device (3) for driving the retarder (1), which retarder control device is designed to determine a retarder braking demand (11, 12), which encodes a retarder braking moment (40) that is to be imparted by the retarder (1), in a manner dependent on the vehicle deceleration demand (10) set;
wherein the retarder (1) has at least one electrical machine (6) designed for regenerative braking, wherein the motor vehicle is a vehicle combination (13, 16) formed by a tractor vehicle (14, 17) and a trailer vehicle, wherein the trailer vehicle is a semi-trailer (18) and/or a trailer (15), wherein at least one rigid axle of the vehicle combination, preferably a trailing axle, leading axle, lift axle and/or a trailer axle, is drive-connected to one or two electrical machines of the retarder for forming an auxiliary drive for the respective rigid axle,
**characterized**
**in that** the motor vehicle has a lift axle (23, 26) having the electrical auxiliary drive, which lift axle, during setting of a vehicle deceleration demand of the retarder apparatus, is lowered if it is in the raised state.

2. The motor vehicle according to Claim 1, wherein the retarder control device (3) is designed to actuate the at least one electrical machine (6) in such a way that the retarder braking moment (40) to be applied is built up with a delay and/or in a ramped manner.

3. The motor vehicle according to Claim 2, wherein a delay in the delayed setting and/or an increase in the ramp-like setting of the retarder braking moment (40) is determined in a manner dependent on a current vehicle weight, a load weight and/or an axle load.

4. The motor vehicle according to one of the preceding claims, wherein at least two of the rigid axles of the motor vehicle each have such an auxiliary drive of the retarder and wherein discrete steps of the vehicle deceleration demand can be set by means of the input device (2), wherein the retarder control device (3) is designed to split the determined retarder braking demand (11) into sub-components for the individual electric auxiliary drive as a function of the set step of the vehicle deceleration demand (10).

5. The motor vehicle according to one of the preceding claims, wherein the electrical machine (6) that forms an auxiliary drive
a) is embodied as a wheel hub drive of the rigid axle; or
b1) is arranged between the wheels of the rigid axle, preferably in the axle body of the rigid axle, and is drive-connected to the drive shaft; and/or
b2) is drive-connected to the drive shaft via a transmission device and/or a differential gear mechanism (19) .

6. The motor vehicle according to one of the preceding claims, wherein the lift axle, when it is lowered, is accelerated by means of the electrical auxiliary drive before reaching the roadway, in particular to the current wheel rotation speed of the non-lift axles of the motor vehicle.

7. The motor vehicle according to one of the preceding claims, wherein the retarder
a) comprises a regenerative hydraulic braking system and the retarder control device (3) splits the determined retarder braking demand into a component (11) that is to be applied by the at least one electrical machine (6) and into a component (12) that is to be applied by the regenerative hydraulic braking system (9), and/or
b) comprises a motor brake and/or a retarder and the retarder control device splits the determined retarder braking demand into a component that is to be applied by the at least one electrical machine and into a component that is to be applied by the motor brake and/or the retarder.

8. The motor vehicle according to one of the preceding claims, wherein the retarder control device (3) is designed to carry out anti-lock braking, in which a retarder braking moment to be applied to one wheel of the motor vehicle is at least temporarily limited to zero or to a prespecifiable value by means of the at least one electrical machine, as required in order to thereby at least temporarily prevent locking of the wheel relative to the roadway.

9. The motor vehicle according to one of the preceding claims, wherein the input device (2) is designed as a manual operating element, operator control lever, steering column stalk, input display and/or as a voice control arrangement.

## Revendications

1. Véhicule automobile comprenant un dispositif de freinage continu (100) comprenant
un frein continu (1) ;
un moyen d'entrée (2) permettant de régler une demande de décélération de véhicule (10), en particulier de la régler par paliers ; et
un moyen de commande de frein continu (3) destiné à activer le frein continu (1) et conçu pour déterminer, en fonction de la demande de décélération de véhicule (10) réglée, une demande de freinage continu (11, 12) qui code un couple de freinage continu (40) que doit appliquer le frein continu (1) ;
le frein continu (1) comportant au moins une machine électrique (6) conçue pour le freinage par récupération,
le véhicule automobile étant un convoi de véhicules (13, 16) formé d'un véhicule tracteur (14, 17) et d'un véhicule remorque, le véhicule remorque étant une semi-remorque (18) et/ou une remorque (15), au moins un essieu rigide du convoi de véhicules, de préférence un essieu traîné, un essieu poussé, un essieu relevable et/ou un essieu de remorque, sont en liaison d'entraînement avec une ou deux machines électriques du frein continu pour former un entraînement auxiliaire pour l'essieu rigide respectif, **caractérisé en ce que**,
le véhicule automobile comporte un essieu relevable (23, 26) qui est pourvu de l'entraînement auxiliaire électrique et qui, si celui-ci est à l'état relevé, s'abaisse lorsqu'une demande de décélération de véhicule du dispositif de freinage continu est réglée.

2. Véhicule automobile selon la revendication 1, le moyen de commande de frein continu (3) étant conçu pour commander l'au moins une machine électrique (6) de telle sorte que le couple de freinage continu (40) à appliquer soit retardé et/ou construit comme une rampe.

3. Véhicule automobile selon la revendication 2, un retard du réglage retardé et/ou une pente du réglage en rampe du couple de freinage continu (40) étant déterminé en fonction d'un poids actuel du véhicule, d'un poids de cargaison et/ou d'une charge par essieu.

4. Véhicule automobile selon l'une des revendications précédentes, au moins deux des essieux rigides du véhicule automobile comportant chacun un tel entraînement auxiliaire du frein continu et des niveaux discrets de la demande de décélération de véhicule pouvant être réglés à l'aide du moyen l'entrée (2), le dispositif de commande de freinage continu (3) étant conçu pour diviser la demande de freinage continu déterminée (11) en composantes pour les entraînements auxiliaires électriques individuels en fonction du niveau réglé de la demande de décélération de véhicule (10) .

5. Véhicule automobile selon l'une des revendications précédentes, la machine électrique (6) qui forme un entraînement auxiliaire
a) étant conçue comme un entraînement de moyeu de roue de l'essieu rigide ; ou
b1) étant disposée entre les roues de l'essieu rigide, de préférence dans le corps d'essieu de l'essieu rigide, et étant en liaison d'entraînement avec l'arbre d'entraînement ; et/ou
b2) étant en liaison d'entraînement avec l'arbre d'entraînement par le biais d'un moyen de transmission et/ou d'une transmission différentielle (19).

6. Véhicule automobile selon l'une des revendications précédentes, l'essieu relevable étant accéléré lors de l'abaissement à l'aide de l'entraînement électrique auxiliaire avant d'atteindre la chaussée, notamment à la vitesse de rotation de roue actuelle des essieux non relevables du véhicule automobile.

7. Véhicule automobile selon l'une des revendications précédentes, le frein continu
a) comprenant un système de freinage hydraulique à récupération et le moyen de commande de frein continu (3) divisant la demande de freinage continu déterminée en une composante (11) qui doit être appliquée par l'au moins une machine électrique (6) et une composante (12) qui est générée par le système de freinage hydraulique à récupération (9) ; et ou
b) comprenant un frein moteur et/ou un retardateur et le moyen de commande de frein continu divise la demande de freinage continu déterminée en une composante qui doit être appliquée par l'au moins une machine électrique et une composante qui doit être appliquée par le frein moteur et/ou le retardateur.

8. Véhicule automobile selon l'une des revendications précédentes, le moyen de commande de frein continu (3) étant conçu pour effectuer, en cas de besoin, un freinage antiblocage dans lequel un couple de freinage continu destiné à être appliqué à une roue du véhicule automobile est limité au moins temporairement à zéro ou à une valeur prédéterminable à l'aide de l'au moins une machine électrique afin d'éviter au moins temporairement un blocage de la roue par rapport à la route.

9. Véhicule automobile selon l'une des revendications précédentes, le moyen d'entrée (2) étant réalisé sous la forme d'un élément de commande manuelle, d'un levier de commande, d'un levier de colonne de direction, d'un affichage d'entrée et/ou d'une commande vocale.
